Europäisches Patentamt

European Patent Office

Office européen des brevets

(11) Numéro de publication: **0 022 048**
**B1**

(12) **FASCICULE DE BREVET EUROPEEN**

(45) Date de publication du fascicule du brevet: **08.08.84**

(51) Int. Cl.³: **C 08 G 69/34,**
C 08 G 69/26

(21) Numéro de dépôt: **80420078.0**

(22) Date de dépôt: **25.06.80**

(54) Copolyamides à base d'hexaméthylène diamine d'acide adipique et d'acides dimères et procédés de préparation.

(30) Priorité: **26.06.79 FR 7917264**

(43) Date de publication de la demande:
**07.01.81 Bulletin 81/1**

(45) Mention de la délivrance du brevet:
**08.08.84 Bulletin 84/32**

(84) Etats contractants désignés:
**AT BE CH DE GB IT LI LU NL SE**

(56) Documents cités:
**FR - A - 1 395 076**
**FR - A - 1 493 971**

**Journal of Polymer Science, Vol.XLVI, (1960),**
**pp.303-316**
**British Polymer Journal, (1973), Vol.5, pp.21-32**

Le dossier contient des informations techniques
présentées postérieurement au dépôt de la
demande et ne figurant pas dans le présent
fascicule.

(73) Titulaire: **RHONE-POULENC SPECIALITES**
**CHIMIQUES**
**"Les Miroirs" 18, Avenue d'Alsace**
**F-92400 Courbevoie (FR)**

(72) Inventeur: **Coquard, Jean**
**Route du Crest**
**F-69290 Grezieu-la-Varenne (FR)**
Inventeur: **Goletto, Jean**
**"le Joli Mai" 2, rue Tramier**
**F-69130 Ecully (FR)**

(74) Mandataire: **Trolliet, Maurice et al,**
**RHONE-POULENC RECHERCHES Service Brevets**
**Chimie et Polymères Centre de Recherches de**
**Saint-Fons B.P. 62**
**F-69192 St-Fons Cédex (FR)**

Courier Press, Leamington Spa, England.

# 0 022 048

**Description**

La présente invention concerne de nouveaux copolyamides homogènes à base d'hexaméthylène diamine, d'acide adipique et de dimères d'acide gras ainsi que des procédés spécifiques pour les obtenir.

Pour certaines applications des matières plastiques on a besoin de polymères présentant un ensemble de propriétés chimiques et physiques que l'on peut trouver partiellement dans les polyamides. A la résistance chimique et aux propriétés de tenacité des polyamides conventionnels: bon allongement — bonne absorption d'énergie — il peut être nécessaire d'ajouter des propriétés de souplesse. De nombreux copolymères ont été proposés dans ce but mais on obtient rarement l'ensemble des propriétés recherchées, la modification pour améliorer une propriété particulière se traduisant par une diminution d'une autre propriété.

Un progrès a été réalisé en proposant des copolymères souples à base de caprolactame, de dimères d'acides gras et d'hexaméthylène diamine qui allient à une bonne souplesse une résistance de rupture à la traction supérieure à 5 daN/mm$^2$ et une bonne résistance à l'eau: demande de brevet français n° 77/33 341.

Pour certaines applications on peut avoir besoin de copolymères ayant une meilleure tenue thermique et donc des points de fusion plus élevés. Divers essais avaient été réalisés selon des procédés connus pour obtenir des copolyamides à base de polyadipate d'hexaméthylène diamine et présentant les propriétés recherchées, mais on se heurtait toujours à des problèmes d'homogénéité des copolymères.

Il a maintenant été trouvé des copolyamides souples et homogènes à base d'acide adipique, de dimères d'acides gras obtenus par fractionnement d'acides gras polymérisés et contenant en poids plus de 95% de dimères et d'hexaméthylène diamine, caractérisés en ce que, d'une part, les dimères sont issus d'acides gras obtenus par polymérisation de mélanges d'acides en C18 et d'autre part, le rapport molaire en acide adipique par rapport aux acides totaux est compris entre 0,5 et 0,99 et finalement le point obtenu en portant en abscisse la fraction molaire d'acide adipique et en ordonnée la température de fusion du copolyamide, déterminée par microcalorimètrie différentielle avec une variation de température de 10°C par minute est compris dans l'aire A B C D portée sur le graphique représenté en annexe.

Par copolyamide souple on entend un copolyamide dont le module en flexion sera sensiblement inférieur (par exemple de 1 à 10 fois) à celui des polyamides conventionnels comme le polyhexaméthylène adipamide ou le polycaprolactame et sera de l'ordre ou même inférieur à celui des polyamides considérés comme souples tel que par exemple le polyundécanamide.

Par copolyamide homogène on entend un copolymère ne présentant qu'une phase à l'état fondu ou à l'état solide ainsi qu'on peut le constater, par exemple, par microscopie électronique de balayage en révélant l'éventuelle phase dispersée par fixation d'acide phosphotungstique.

Un moyen beaucoup plus simple pour constater cette homogénénité consiste à observer l'état de transparence d'une part d'une masse fondue ayant environ de 0,2 à 0,5 cm d'épaisseur chauffée à une température supérieure d'au moins 10°C à son point de fusion et d'autre part d'un film ou jonc obtenu à partir de cette masse fondue après refroidissement rapide par exemple par immersion dans l'eau à température ambiante. Un film ou jonc absolument transparent indique une homogénéité parfaite du polymère; un film ou jonc présentant des plages louches ou qui est translucide est le signe d'une certaine hétérogénéité; un film blanc comportant des trainées ou des inclusions (oeils par exemple) est le signe d'une hétérogénéité importante.

A ce test optique dont l'appréciation est en partie subjective il a été préféré un autre moyen de détermination de l'homogénéité qui se rapporte aux températures de fusion ainsi qu'il sera précisé plus loin.

Les acides gras monomères en C18 dont on a parlé ci-avant sont des monoacides aliphatiques saturés ou insaturés.

Les acides gras polymères obtenus par polymérisation en présence le plus souvent de peroxydes ou d'acides de Lewis peuvent être fractionnés. On peut aussi les hydrogéner pour réduire leur taux d'insaturation et ainsi réduire leur coloration.

Les produits de départ les plus couramment utilisés sont des compositions issues d'acides oléique et linoléique hydrogénées et qui renferment:

de 1 à 15% en poids d'acide monobasique.

jusqu'à 98% en poids d'acide dibasique

de 1 à 25% en poids d'acide tribasique ou au-delà.

On utilise pour l'obtention de copolyamides selon l'invention des compositions dont la fraction d'acide dimère est supérieure à 95%. On préférera des acides dimères dont la teneur en acide monofonctionel est inférieure à 0,5% en poids, dont la teneur en acide de fonctionnalité supérieure à 2 est inférieure à 5% en poids.

Le pourcentage en mole d'acide adipique par rapport à la quantité totale d'acides: acide adipique et acides dimères sera supérieur à 50% si l'on veut obtenir des copolymères ayant un point de fusion élevé. Ce pourcentage sera inférieur à 99% si l'on veut conserver les propriétés de souplesse apportées

2

par les acides dimères. Il va de soi que dans la gamme de copolymères obtenus en faisant varier le taux d'acide adipique de 99% à 50%, on obtiendra des produits dont la souplesse sera plus ou moins grande et le point de fusion plus ou moins élevé. Les produits dont la fraction molaire en acide adipique est comprise entre 0,95 et 0,80 présentent un intérêt particulier car ils ont à la fois un point de fusion élevé et une bonne souplesse.

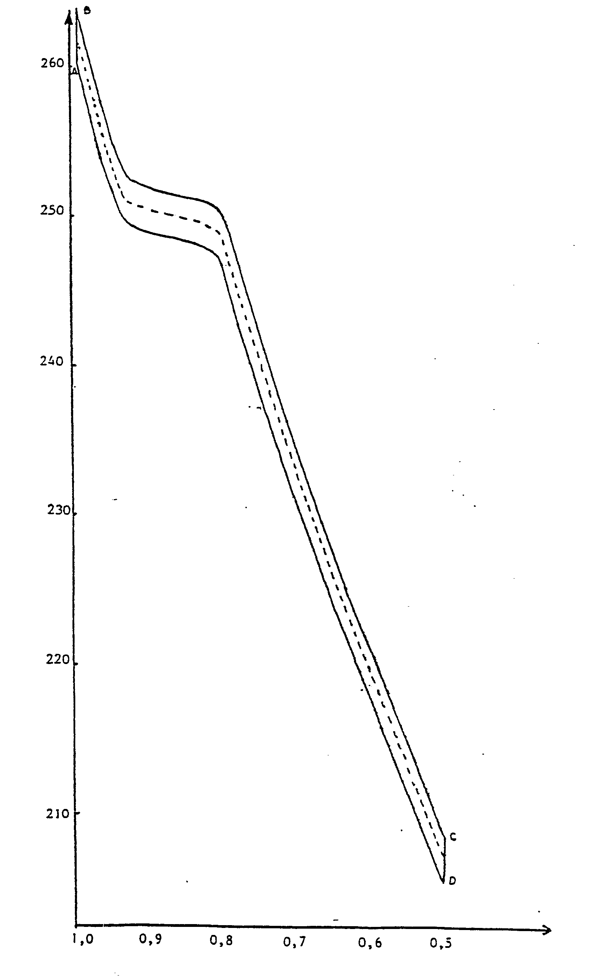

Il a été trouvé en effet que les points de fusion des copolyamides homogènes selon l'invention se situaient sur une courbe déterminée ou plus précisément, pour tenir compte des écarts possibles dûs au mode de détermination des points de fusion et à la nature elle-même des copolyamides, dans une zone déterminée par les courbes représentant un écart de $\pm 2°C$ par rapport à la courbe théorique moyenne des points de fusion. Cette aire A B C D est portée sur la figure en annexe.

On porte en abscisse la fraction molaire d'acide adipique et en ordonnée la température de fusion du copolymère mesurée par microcalorimètre différentielle avec une variation de température de 10°C par minute.

Les copolyamides homogènes selon l'invention présentent un point de fusion unique qui se trouvent dans l'aire A B C D. Les copolyamides hétérogènes se différencient des précédents soit par un point de fusion unique mais significativement supérieur à celui attendu et donc en dehors de l'aire A B C D soit par deux points de fusion dont l'un est voisin du point de fusion du polyhexaméthylène adipamide.

Un autre objet de l'invention concerne des procédés pour obtenir les copolyamides souples et homogènes ayant un rapport molaire en acide adipique compris entre 0,5 et 0,99% par rapport aux acides totaux mis en oeuvre.

En effet ni les procédés classiques de polycondensation des polyamides ni le procédé particulier revendiqué dans le brevet français 1 395 076 de préparation de copolyamide à base d'acide adipique (fraction molaire inférieure à 0,5) d'acide dimère et d'hexaméthylène diamine, ne peuvent être appliqués dans la préparation de copolyamides selon notre invention.

Avec ces deux types de procédé, on obtient en effet des copolymères hétérogènes de caractéristiques physiques difficilement reproductibles et impropres aux opérations de filage ou d'extrusion.

On a trouvé qu'il était possible de préparer des copolyamides homogènes selon l'invention en préparant en milieu hétérogène des prépolymères à partir d'un mélange d'acide adipique, d'acide dimère et d'hexaméthylène diamine ou de leurs sels correspondants, ces prépolymères étant ensuite homogénéisés dans des conditions telles que l'état d'équilibre des réactions d'amidification n'était pas modifié, puis en transformant les prépolymères homogènes ainsi obtenus en polycondensats de haut poids moléculaire.

Dans un premier procédé on part de compositions contenant soit les acides adipique et dimère et l'hexaméthylène diamine soit le sel d'acide adipique et d'hexaméthylène diamine et le sel d'acide dimère et d'hexaméthylène diamine soit l'un des sels et les constituants à l'état libre de l'autre sel, les quantités des constituants de la composition de départ étant telles que les teneurs en groupements aminés et en groupements carboxyliques ne différent pas de plus de 5% et de préférence de 1%.

Si l'on veut assurer une parfaite fiabilité du procédé on aura intérêt à réaliser de façon la plus parfaite possible des compositions stoechiométriques.

On a trouvé que pour obtenir les nouveaux copolyamides à forte teneur en acide adipique selon l'invention, il était indispensable d'effectuer une phase d'homogénéisation d'environ 30 min à 5 heures à haute température (de l'order de 280°C) sous une pression élevée de vapeur d'eau (de l'ordre de 20 bars).

Les conditions de la phase d'homogénéisation sont critiques. Les paramètres à envisager sont le taux d'acide adipique, la température, la pression et la durée de cette phase; ces paramètres ne sont pas indépendants.

Pour un taux d'acide adipique donné (taux qui varie en mole de 0,5 à 0,99), la durée peut varier de 30 minutes à 5 heures environ et de préférence de 1 heure à 4 heures. Cette durée est fonction de la température et de la pression. Cette température est comprise entre 270°C et 290°C. La pression de vapeur d'eau est elle-même comprise entre 13 et 25 bars, de préférence entre 15 et 20 bars.

Les intervalles revendiqués correspondent aux conditions industriellement les plus rentables mais il va de soi qu'il est possible d'obtenir une bonne homogénéisation en plaçant la valeur d'un paramètre en dehors des valeurs revendiquées et en compensant l'effet produit par la variation d'un autre paramètre.

Il est indispensable durant cette phase qu'il n'y ait pas de déplacement sensible de l'équilibre des réactions d'amidification. La maîtrise de cette condition sera obtenue en évitant tout départ de produit volatil.

Le processus de mise en oeuvre du procédé comprendra un certain nombre d'étapes successives que nous décrirons ci-dessous à titre non limitatif.

Le sel de l'acide dimère et de l'hexaméthylène diamine n'est pas compatible avec les solutions aqueuses d'adipate d'hexaméthylène diamine. Pour réaliser la stoechiométrie de départ entre l'acide dimère et l'hexaméthylène diamine, stoechiométrie nécessaire à l'obtention de polymères de haut poids moléculaire, on peut opérer soit par pesée précise des réactifs de titre parfaitement connu au moment de la mise en oeuvre (méthode difficile à utiliser industriellement) soit en réalisant le sel de l'acide dimère en solution alcoolique dont on peut alors ajuster le pH (méthode conduisant à des copolyamides plus colorés).

Une variante de ce premier procédé, facilement applicable industriellement et permettant de réaliser la stoechiométrie initiale de l'acide adipique, de l'acide dimère et de l'hexaméthylène diamine consiste à préparer en émulsion le sel de l'acide dimère et de l'hexaméthylène diamine dans une solution aqueuse d'adipate d'hexaméthylène diamine, la stoechiométrie étant contrôlée par mesure du pH de solutions échantillons obtenues par dilution de l'émulsion par un alcool.

La composition des produits de départ ainsi préparée est mise sous atmosphère inerte puis amenée de façon progressive et régulière à l'état d'équilibre chimique correspondant au début de la phase suivante. Une façon particulièrement adaptée consiste à chauffer sous pression autogène la composition de façon à la porter à la pression retenue pour la phase d'homogénéisation suivante. On amène ensuite progressivement la température à celle choisie pour la phase d'homogénéisation par distillation progressive de l'eau.

La phase suivante est la phase d'homogénéisation décrite plus haut.

La phase finale permet l'achèvement de la polycondensation selon les procédés connus.

On pourra par exemple effectuer une décompression progressive avec distillation simultanée de l'eau résiduelle et réduction éventuellement de la température à celle choisie pour la "cuisson" c'est à dire le traitement thermique conduisant au polymère final. La température correspondant à cette phase est en général comprise entre 260 et 290°C de préférence entre 275 et 285°C. La pression peut être la pression atmosphérique ou une pression inférieure. Le copolyamide est enfin récupéré par extrusion sous pression de gaz inerte de 1 à 5 bars.

Un deuxième procédé a été mis au point qui permet de ne pas travailler sous haute pression, une certaine pression pouvant toutefois présenter un intérêt technologique. Le choix des produits de départ est très ouvert.

Le principe de ce procédé consiste à réaliser à haute température un prépolymère à groupements terminaux carboxyliques ou aminés de masse moléculaire moyenne en mole inférieure à 10 000 et de préférence inférieure à 5000. Ce prépolymère subit alors une phase d'homogénéisation entre 265°C et 290°C, de préférence entre 270°C et 285°C pendant une durée qui dépend de la température choisie et de la composition du polymère mais qui varie généralement de 10 min à 2 h environ.

Le prépolymère obtenu à l'issu de cette phase est maintenu à une température comprise entre 260°C et 290°C pendant l'addition progressive du réactif ou d'un mélange des réactifs en défaut jusqu'à l'obtention d'un copolycondensat présentant la viscosité désirée.

Bien qu'il soit possible de réaliser un prépolymère à groupements terminaux essentiellement de type aminé, on préférera généralement réaliser un prépolymère à groupements terminaux essentiellement de type acide carboxylique pour lequel les risques de ramification par réactions secondaires sont moindres. Dans ce dernier cas on pourra parvenir au cours de la réaction d'achèvement de la condensation à la stoechiométrie ou, selon le cas, obtenir des copolyamides contenant une petite proportion de groupes terminaux acides, ce qui est préférable, ou même éventuellement dépasser la stoechiométrie et parvenir à des copolyamides contenant une petite proportion de groupes terminaux aminés, les produits obtenus étant toutefois moins stables chimiquement.

Cet ajustement de la viscosité est avantageusement réalisé par mesure "in situ" du couple résistant de l'agitateur du polymériseur. L'hexaméthylène diamine peut être ajoutée soit sous forme fondue soit sous forme de solution aqueuse. Dans ce cas toutefois l'addition doit être très progressive et doit être faite de telle façon qu'elle ne provoque d'abaissement significatif de la température de la masse.

Ainsi qu'il est indiqué plus haut un des avantages de ce deuxième procédé consiste dans le choix très ouvert des produits de départ.

Ainsi on peut partir du mélange d'acide adipique, d'acide dimère et d'hexaméthylène diamine, ce dernier produit étant en défaut d'au moins 5% et de préférence d'environ 5 à 20% en poids par rapport à la quantité théoriquement nécessaire pour réaliser la stoechiométrie.

On peut aussi partir du mélange du sel d'acide adipique d'hexaméthylène diamine, d'acide dimère et d'hexaméthylène diamine en défaut d'au moins 5% et de préférence 5 à 20% en poids comme ci-dessus.

Une variante interessante sur le plan pratique consiste à réaliser en un premier temps la dispersion de l'acide adipique dans l'acide dimère à une température comprise entre 130 et 150°C puis à ajouter l'hexaméthylène diamine fondue. On obtient ainsi une masse réactionnelle très bien dispersée.

Il est aussi possible de partir de la composition mise en oeuvre dans le premier procédé et qui est constituée par une émulsion du sel d'acide dimère et d'hexaméthylène diamine dans une solution aqueuse d'adipate d'hexaméthylène diamine: il est alors nécessaire d'ajouter à la composition un excès d'acide adipique ou d'acide dimère pour se trouver dans les conditions permettant d'obtenir en un premier temps un prépolymère à groupements terminaux acides carboxyliques.

Un troisième type de procédé a été mis au point qui consiste à réaliser le prépolymère du copolyamide en phase homogène à une température comprise entre 150 et 300°C de préférence 190°C et 250°C. Cette condition de phase homogène peut être réalisée en ajoutant au mélange réactionnel de départ un solvant présentant un certain nombre de propriétés.

Selon ce procédé il sera surtout intéressant de partir d'un mélange réactionnel constitué essentiellement par de l'acide adipique, de l'acide dimère et de l'hexaméthylène diamine ou par leurs sels correspondants, les teneurs en groupements aminés et en groupements acides carboxyliques ne différant pas de plus de 5% et de préférence de plus de 1%.

Le solvant utilisé doit être inerte vis à vis des réactifs de base et des réactions d'amidification. Ses caractéristiques physiques notamment son point d'ébullition devront être compatibles avec les conditions de haute température requises pour les réactions d'amidification. Ainsi ce solvant aura avantageusement un point d'ébullition compris entre 170°C et 250°C. Il a été trouvé que la N-méthylpyrrolidone conduisait à des résultats particulièrement intéressants. Elle est généralement utilisée.

Le prépolymère ainsi obtenu est ensuite transformé par chauffage durant lequel la moyenne partie du solvant est éliminé par distillation, à une température comprise entre 200°C et 290°C.

Les quantités résiduelles de solvant peuvent être éliminées à la fin de cette phase par mise sous vide.

Il va de soi que dans tous les procédés ainsi décrits, selon l'invention, la composition des réactifs de départ peut aussi comprendre divers additifs couramment utilisés lors de la préparation des polyamides conventionnels. Ces additifs sont en particulier des agents limiteurs de chaîne tel que principalement les acides monocarboxyliques comme par exemple l'acide acétique, les agents nucléants, les stabilisants de nature variée.

On ne sort pas de l'invention en mettant en ouevre des compositions renfermant en plus des trois constituants essentiels des quantités minoritaires, d'autres réactifs générateurs de polyamides soit diacides, soit diamines, soit aminoacides ou lactames.

Les procédés selon l'invention permettent d'obtenir des copolyamides homogènes présentant à la fois une souplesse améliorée et une ténacité élevée liées à une bonne résistance à l'hydrolyse et une bonne tenue thermique. Etant parfaitement homogènes, ils ont des propriétés de transparence améliorées et peuvent être mise en oeuvre selon les techniques usuelles d'injection, extrusion ou filage pour donner des objets conformés: pièces, films ou fils de très grande régularité.

Les exemples suivants permettent d'illustrer l'invention.

Exemple 1

Préparation du sel de l'acide dimère et de l'hexaméthylène diamine en émulsion dans une solution aqueuse d'adipate d'hexaméthylène diamine.

Dans un réacteur de verre de 3 litres muni d'un agitateur et maintenu sous léger balayage d'azote on charge:
— adipate d'hexaméthylène diamine (sel N) 834,6 g (3,185 moles) cristallisé;
— eau permutée: 1150 g.
Le mélange est agité à 25°C jusqu'à dissolution complète du sel N.
— on introduit l'hexaméthylène diamine cristallisée: 80,6 g (0,695 mole)
— eau permutée: 181 g
Le mélange est agité à 25°C jusqu'à dissolution complète de l'hexaméthylène diamine.
— on introduit lentement sous agitation 421,7 g d'un acide dimère vendu sous l'appellation Empol 1010 (≃0,74 mole) et comprenant en poids 0,05% de monomère et 95,55% de dimère.
L'émulsion est agitée pendant 2 heures.

On prélève 20 g d'émulsion et dilue par 17,8 g d'un mélange eau/isopropanol (21,9/78,1 poids pour poids). Le pH à 20°C de la solution est 7,63 (solution de sel d'acide dimère à 10% dans le mélange sel N/eau/isopropanol 18,4/40,8/40,8 en poids).
— on ajoute 14 g d'une solution aqueuse à 30% d'hexaméthylène diamine, agite durant une heure et contrôle le pH sur un prélèvement de 20 g comme précèdemment. Le pH à 20°C est de 8,40 et correspond, à ± 0,1 unité pH près, au pH de la stoechiométrie déterminé dans les mêmes conditions de concentrations et de solvant par pH métrie.

On obtient ainsi une émulsion assez stable à 25°C à 50% d'extrait sec renfermant un mélange de sel N et de sel d'acide dimère 62,2/37,8 en poids directement utilisable pour la préparation des nouveaux copolyamides.

Exemple 2

Préparation des nouveaux copolyamides

Le mode opératoire général pour l'obtention de ces copolyamides est le suivant:
— on opère dans un autoclave en acier inox agité et équipé pour travailler jusqu'à 300°C sous 25 bars,
— on introduit à froid dans l'appareil les réactifs qui sont:

soit ( le sel N en solution aqueuse à 50%
(+ l'hexaméthylène diamine en solution aqueuse à 30%
procédé a (+ l'acide dimère pesé à la stoechiométrie
(+ le limiteur de chaînes (soit excès d'acide dimère,
( soit acide acétique en solution aqueuse)

soit     ( une émulsion du type de celle de l'exemple 1
                (+ éventuellement une solution aqueuse de sel N à 50%
procédé b   ( ajustement de la composition copolymère
                (+ le limiteur de chaînes

— L'appareil est purgé à l'azote puis on élève la température de la masse à 225°C on maintenant la pression autogène. On atteint 20 bars de pression. On distille sous pression en 1 heure de l'eau de façon à atteindre une température masse élevée, de $\theta$°C. On arrête la distillation pour effectuer la phase d'homogénéisation de x minutes à $\theta$°C masse, sous P bars de vapeur d'eau.

— On décomprime jusqu'à pression atmosphérique en 30—90 minutes en maintenant la température à $\theta$°C.

— Le polymère qui a été mis sous agitation dès que la masse a dépassé 250°C est maintenu sous agitation à $\theta$°C sous pression atmosphérique durant 30 minutes, extrudé sous pression d'azote (2—6 bars) et granulé après refroidissement à l'eau.

· Les caractéristiques des polymères obtenus sont rassemblées dans le tableau suivant.

— Les points de fusion (Tf°C) et de cristallisation au refroidissement (TC°C) ont été déterminés par microcalorimétrie différentielle (10°C/minute sous azote).

— Les viscosités inhérentes ont été déterminées à 25°C en solution à 0,5 g/100 ml dans le m-crésol

$$\gamma\ \text{inh.} = \frac{1}{C} \log \frac{t}{to}$$

t = temps d'écoulement de la solution
to = temps d'écoulement du solvant pur
C = concentration en g/dl

— les teneurs en groupements $NH_2$ sont déterminées par dosage à la potasse glycolique en présence de phénolphtaléïne d'une solution de polymère dans le mélange phénol/eau (90/10).

— Les teneurs en groupements COOH sont déterminées par dosage à la potasse glycolique en présence de phénol phtaléïne d'une solution de polymère dans l'alcoool benzylique à 200°C.

Ces deux teneurs sont exprimées en milliéquivalent par kg (meq/kg).

| Ex. | COMPOSITION DES COPOLYAMIDES FRACTION MOLAIRE EN ADIPIQUE DU MELANCE D'ACIDES | LIMITEUR DE CHAINES | | CONDITIONS DE LA PHASE D'-HOMOGENEISATION | | | CARACTERISTIQUES DU COPOLYAMIDE | | | | | |
|---|---|---|---|---|---|---|---|---|---|---|---|---|
| | | Nature | Teneur %/Mole De Sels | 0 °C | P Bars | x minutes | Aspect | Tf°C | Tc°C | $\gamma$ inh de 1/g | COOH meq/Kg | NH2 meq/Kg |
| 2 A | 0,742 | 0 | 0 | 285 | 18 | 0 | Hétérogène | 260 | | | | |
| 2 B | 0,87 | 0 | 0 | 275 | 18 | 0 | Hétérogène | 260 | | 1,089 | | |
| 2 C | 0,656 | 0 | 0 | 280 | 18 | 120 | Homogène | 225 | 170 | 0,971 | 80 | 29 |
| 2 D | 0,742 | 0 | 0 | 280 | 18 | 60 | Hétérogène | 250 | 195 | | 80 | 26 |
| 2 E | ,, | 0 | 0 | 280 | 20 | 60 | Hétérogène | 250 | 202 | 0,967 | 83,7 | 36 |
| 2 F | ,, | 0 | 0 | 280 | 20 | 90 | presque homogène | 248 | 197 | 0,997 | 60,2 | 53 |
| 2 G | ,, | 0 | 0 | 280 | 20 | 120 | Homogène | 236 | 184 | 0,987 | 70 | 56,8 |
| 2 H | ,, | 0 | 0 | 280 | 20 | 120 | Homogène | 237 | 186 | 1,12 | 58,4 | 46,3 |
| 2 I | 0,812 | 0 | 0 | 280 | 20 | 120 | Homogène | 245 | 195 | 1,157 | 77,75 | 37,8 |
| 2 J | 0,842 | 0 | 0 | 280 | 20 | 120 | Homogène | 247 | 198 | 1,054 | 94,6 | 32,7 |
| 2 K | ,, | 0 | 0 | 280 | 20 | 240 | Homogène | 246 | 198 | 1,034 | 78,6 | 84,0 |
| 2 L | 0,87 | 0 | 0 | 280 | 20 | 60 | Hétérogène | 257 | 206 | 1,21 | 73 | 43,8 |
| 2 M | ,, | 0 | 0 | 280 | 20 | 120 | Homogène | 248 | 200 | 1,09 | 75,7 | 56 |
| 2 N | ,, | Dimère | 0,05 | 280 | 20 | 120 | Homogène | 247 | 201 | 1,1 | 63,3 | 64,3 |
| 2 O | ,, | Dimère | 0,05 | 280 | 20 | 120 | Homogène | 248 | 205 | 1,08 | 69,5 | 53,6 |
| 2 P | 0,92 | 0 | 0 | 280 | 20 | 90 | Hétérogène | 254 | 211 | 1,13 | 70,4 | 50 |
| 2 Q | ,, | 0 | 0 | 280 | 18 | 120 | Hétérogène | 255 | 200 | 1,08 | 58 | 65,5 |
| 2 R | ,, | 0 | 0 | 280 | 20 | 180 | Homogène | 247 | 205 | 1,22 | 51,4 | 79,5 |
| 2 S | 0,963 | 0 | 0 | 280 | 20 | 180 | Hétérogène | 254 | 205 | 1,22 | 58,9 | 79,3 |
| 2 T | ,, | 0 | 0 | 280 | 20 | 240 | Homogène | 254 | 209 | 1,25 | 71,4 | 64,7 |
| 2 U | 0,982 | 0 | 0 | 280 | 20 | 240 | Homogène | 257 | 211 | 1,21 | 75,8 | 62,3 |

0 022 048

Les exemples 2C, 2G, 2H, 2I, 2J, 2K, 2M, 2N, 2O, 2R, 2T et 2U illustrent la préparation et certaines caractéristiques des nouveaux copolyamides. On remarque que pour une température de 280°C et une pression de vapeur de 20 bars, la durée de la phase d'homogénéisation doit être portée d'environ 2 heures à environ 4 heures lorsque la fraction molaire de l'acide adipique passe de 0,65 à 0,98.

Les exemples 2A, 2B, montrent que le procédé du polyamide 6,6 ne permet pas d'obtenir des copolyamides dérivés d'acide adipique et d'acide dimère de fraction molaire en adipique > 0,5 homogènes.

Les exemples 2D, 2E, 2F, 2L, 2P, 2Q, 2S montrent que des conditions d'homogénéisation insuffisantes conduisent également à des copolyamides de fraction molaire en adipique > 0,5 non homogènes.

## Exemple 3

Polycondensation à partir des réactifs de base en opérant par acidolyse

On opère dans un autoclave de 1 litre en acier inox équipé d'un agitateur qui peut tourner à 50 t/min et d'une ampoule de coulée thermostatée à 80°C permettant l'introduction du complément d'hexaméthylène diamine.

Charges: 169,65 g (soit 1,161 moles) d'acide adipique pur
253 g (soit 0,443 mole) d'acide dimère
167,55 g (soit 1,444 moles) d'hexaméthylène diamine
soit 90% de la quantité théorique nécessaire
pour réaliser la stoechiométrie.

On charge à froid dans l'autoclave les acides adipique et dimère.
On agite à 15 t/min. On réalise 6 purges sous 8 bars d'azote.
On porte la masse progressivement à 150°C.
On agite alors à 50 t/min et on introduit l'hexaméthylène diamine fondue en 20 min.
On porte ensuite la masse réactionnelle à 285°C en 45 min environ et on maintient 1 heure à cette température. On introduit alors en 10 min 17 g d'hexaméthylène diamine fondue (0,146 mole). On agite de nouveau 1 heure à 280°C en ramenant la vitesse d'agitation à 10 t/min. Le copolyamide est recueilli dans l'eau froide. Il est parfaitement transparent et donc homogène.

Les caractéristiques du produit obtenu sont les suivantes

Tf: 239°C
Tc: 191°C
$\gamma$ inh: 1,02
Taux d'acide en meq/kg 80,30
Taux d'amine en meq/kg 32,5.

## Exemple 4

Polycondensation à partir des réactifs de base par acidolyse

On opère en réalisant dans un premier temps un prépolymère homogène avec un défaut de diamine de 17% dans un réacteur en verre de 1 litre muni d'une agitation de type ancre raclante en inox et chauffage par bain d'huile thermorégulé.

Charges : hexaméthylène diamine: 181 g (1,560 moles)
acide adipique : 205,6 g (1,408 mole)
acide dimère : 280 g (0,4857 mole)
hexaméthylène diamine pour ajustement : 38,70 g (0,334 mole)

On charge à température ambiante dans le réacteur 181 g d'hexaméthylène diamine, 205,6 g d'acide adipique et 280 g d'acide dimère. On réalise 5 purges en établissant le vide puis en introduisant de l'azote. L'appareil est ensuite maintenu sous un léger courant d'azote. Le réacteur est ensuite immergé dans le bain d'huile préchauffé à 140°C; On agite et monte la température du bain à 280°—285°C en 1 h 10. Après 30 min d'agitation à 280°C la masse est parfaitement homogène, peu visqueuse. On introduit alors en 30 min 38,7 g d'hexaméthylène diamine fondue pour rétablir la stoechiométrie. On agite de nouveau 1 heure à 280—285°C. La viscosité de la masse s'élève. Le copolyamide obtenu est recueilli par coulée dans l'eau froide.

Les caractéristiques du copolymère sont les suivantes:
produit transparent en jonc de diamètre 3 à 5 mm
viscosité inhérente : 0,90 dl/g
point de fusion déterminé par microcalorimétrie différentielle : 235°C
point de cristallisation au refroidissement : 186°C.

## Exemple 5

Polycondensation en milieu homogène

On opère en présence de N-méthylpyrrolidone (NMP) qui joue le rôle de solvant et permet d'atteindre rapidement un milieu homogène lorsqu'on engage les réactifs en quantités stoechiométriques.

Dans un réacteur en verre de 1 litre muni d'une agitation de type ancre raclante en inox, chauffage par bain d'huile thermorégulé.

Charges :  Acide adipique : 205,6 g (1,408 mole)

hexaméthylène diamine : 219,7 g (1,894 mole)

Acide dimère : 280 g (0,486 mole)

NMP : 200 g

On introduit les réactifs à température ambiante, on réalise 5 purges en établissant le vide puis en introduisant de l'azote. L'appareil est ensuite maintenu sous léger courant d'azote. On élève la température à 200°C, température à laquelle l'homogénéité du milieu est atteinte. On réalise ensuite un palier de 30 mn à 200°—210°C pour éliminer la majeure partie de la NMP. On porte ensuite la température à 275°C en 1 heure et maintient 1 heure à cette température. Le vide est ensuite établi en 30 min pour éliminer la NMP. En fin de réaction la masse obtenue est très visqueuse.

Les caractéristiques du copolyamide sont les suivantes:

— PF déterminé par microcalorimètrie différentielle : 248°C

— T° cristallisation au refroidissement : 214°C

— Viscosité inhérente : 0,911 dl/g.


**Revendications pour les Etats contractants: BE CH DE GB IT LI LU NL SE**

1. Copolyamides souples et homogènes à base d'acide adipique, de dimères d'acides gras obtenus par fractionnement d'acides gras polymérisés et contenant en poids plus de 95% de dimères et d'hexaméthylène diamine caractérisés en ce que, d'une part, les dimères sont issus d'acides gras obtenus par polymérisation de mélanges d'acides en C18 et, d'autre part, le rapport molaire en acide adipique par rapport aux acides totaux est compris entre 0,5 et 0,99 et finalement le point obtenu en portant en abscisse la fraction molaire d'acide adipique et en ordonnée la température de fusion du copolyamide, déterminée par microcaolorimètrie différentielle avec une variation de température de 10°C par minute est compris dans l'aire A B C D portée sur le graphique représenté en annexe.

2. Copolyamides selon la revendication 1, caractérisés en ce que le dimère d'acide gras contient une fraction en monomère inférieure à 0,5%, le reste étant de fonctionnalité supérieure à 2.

3. Procédé d'obtention de copolyamides selon la revendication 1 caractérisé par la préparation en milieu hétérogène de prépolymères à partir d'un mélange d'acide adipique, d'acide dimère et d'hexaméthylène diamine ou de leurs sels correspondants, ces prépolymères étant ensuite homogénéisés dans des conditions telles que l'état d'équilibre des réactions d'amidification n'est pas modifié, les prépolymères homogènes étant enfin transformés en polycondensats de haut poids moléculaire.

4. Procédé selon la revendication 3, caractérisé:

1 — par la mise en oeuvre d'une composition constituée essentiellement par un mélange d'acide adipique, d'acide dimère et d'hexaméthylène diamine ou de leurs sels correspondants, telle que les teneurs en groupements aminés et en groupements carboxyliques ne diffèrent pas de plus d'un maximum de 5% en valeur absolue, mise en oeuvre consistant à amener de façon progressive et régulière la composition par chauffage jusqu'à 270°C sous une pression de vapeur d'eau comprise entre 13 et 25 bars, ce qui est l'état d'équilibre chimique correspondant au début de la phase suivante;

2 — par une phase d'homogénéisation d'une durée comprise entre 0,5 et 5 heures, à une température comprise entre 270°C et 290°C sous une pression d'eau entre 13 et 25 bars pendant laquelle l'état d'équilibre des réactions d'amidification n'est pas modifié, suivie d'une polycondensation selon les procédés connus.

5. Procédé selon la revendication 4, caractérisé en ce que les teneurs en groupements aminés et en groupements carboxyliques ne diffèrent pas de plus de 1%.

6. Procédé selon la revendication 4, caractérisé en ce que la composition de départ est une émulsion du sel d'acide dimère et d'hexaméthylène diamine dans la solution aqueuse du sel d'acide adipique et d'hexaméthylène diamine et dont la stoechiométrie est ajustée par mesure du pH.

7. Procédé selon la revendication 3, caractérisé

1 — par la mise en oeuvre d'une composition constituée essentiellement par un mélange d'acide adipique, d'acide dimère et d'hexaméthylène diamine et/ou de leurs sels correspondants, telle que les teneurs en groupements aminés et en groupements carboxyliques diffèrent de plus de 5%, mise en oeuvre consistant à amener de façon progressive et régulière la composition à une température correspondant au début de la phase suivant;

2 — par une phase d'homogénéisation d'une durée comprise entre 10 min et 2 heures à une température comprise entre 265°C et 290°C suivie de l'addition progressive du réactif en défaut à des températures comprises entre 260° et 290°C jusqu'à l'obtention du copolycondensat de viscosité désirée.

8. Procédé selon la revendication 7, caractérisé en ce que l'excès de l'un des réactifs aminé ou acide est compris entre 5 et 20% en mole.

9. Procédé selon la revendication 7, caractérisé en ce que le réactif en défaut est l'hexaméthylène diamine.

10. Procédé selon la revendication 7, caractérisé en ce que la phase d'homogénéisation est effectuée à une température comprise entre 270 et 285°C.

11. Procédé d'obtention de copolyamides selon la revendication 1, caractérisé par la préparation directe à une température comprise entre 150 et 300°C, en milieu homogène des copolymères à partir d'un mélange d'acide adipique, d'acide dimère et d'hexaméthylène diamine, le milieu étant rendu homogène par utilisation d'un tiers solvant du mélange des trois produits de départ ou des sels correspondants et/ou des oligomères d'acide adipique et d'hexaméthylène diamine et d'acide dimère et d'hexaméthylène diamine, de masse molaire inférieure à 5 000, ce solvant étant inerte vis à vis des réactifs et des réactions d'amidification.

12. Procédé selon la revendication 11, caractérisé en ce que le solvant a un point d'ébullition compris entre 170° et 250°C.

13. Procédé selon la revendication 12, caractérisé en ce que le solvant est la N-méthylpyrrolidone.

14. Procédé selon la revendication 11, caractérisé en ce que la température de copolycondensation est comprise entre 190° et 280°C.

## Revendications pour l'Etat contractant: AT

1. Procédé d'obtention de copolyamides souples et homogènes à base d'acide adipique, de dimères d'acides gras obtenus par fractionnement d'acides gras polymérisés et contenant en poids plus de 95% de dimères et d'hexaméthylène diamine, caractérisé en ce que:
— on prépare en milieu hétérogène des prépolymères à partir d'un mélange d'acide adipique, d'acide dimère issu d'acides gras obtenus par polymérisation de mélanges d'acides en C18 et d'hexaméthylène diamine ou de leurs sels correspondants, le rapport molaire en acide adipique par rapport aux acides totaux étant comprise entre 0,5 et 0,99,
— on homogénéise ensuite ces prépolymères dans des conditions telles que l'état d'équilibre des réactions d'amidification n'est pas modidié,
— et l'on transforme enfin les prépolymères homogènes ainsi obtenus en polycondensats de haut poids moléculaire pour lesquels le point obtenu en portant en abscisse la fraction molaire d'acide adipique et en ordonnée la température de fusion du copolyamide obtenu, déterminée par microcalorimétrie différentielle avec une variation de température de 10°C par minute, est compris dans l'aire ABCD portée sur le graphique représenté en annexe.

2. Procédé selon la revendication 1, caractérisé:
(1) — par la mise en oeuvre d'une composition constituée essentiellement par un mélange d'acide adipique, d'acide dimère et d'hexaméthylène diamine ou de leurs sels correspondants, telle que les teneurs en groupements aminés et en groupements carboxyliques ne diffèrent pas de plus d'un maximum de 5% en valeur absolue, mise en oeuvre consistant à amener de façon progressive et régulière la composition par chauffage jusqu'à 270°C sous une pression de vapeur d'eau comprise entre 13 et 25 bars, ce qui est l'état d'équilibre chimique correspondant au début de la phase suivante;
(2) — par une phase d'homogénéisation d'une durée comprise entre 0,5 et 5 heures, à une température comprise entre 270°C et 290°C sous une pression d'eau comprise entre 13 et 25 bars pendant laquelle l'état d'équilibre des réactions d'amidification n'est pas modifié, suivie d'une polycondensation selon les procédés connus.

3. Procédé selon la revendication 2, caractérisé en ce que les teneurs en groupements aminés et en groupements carboxyliques ne diffèrent pas de plus de 1%.

4. Procédé selon la revendication 2, caractérisé en ce que la composition de départ est une émulsion du sel d'acide dimère et d'hexaméthylène diamine dans la solution aqueuse du sel d'acide adipique et d'hexaméthylène diamine et dont la stoechiométrie est ajustée par mesure du pH.

5. Procédé selon la revendication 1, caractérisé:
(1) — par la mise en oeuvre d'une composition constituée essentiellement par un mélange d'acide adipique, d'acide dimère et d'hexaméthylène diamine et/ou de leurs sels correspondants, telle que les teneurs en groupements aminés et en groupements carboxyliques diffèrent de plus de 5%, mise en oeuvre consistant à amener de façon progressive et régulière la composition à une température correspondant au début de la phase suivante;
(2) — par une phase d'homogénéisation d'une durée comprise entre 10 min et 2 heures à une température comprise entre 265°C et 290°C suivie de l'addition progressive du réactif en défaut à des températures comprises entre 260°C et 290°C jusqu'à l'obtention du copolycondensat de viscosité désirée.

6. Procédé selon la revendication 5, caractérisé en ce que l'excès de l'un des réactifs aminé ou acide est compris entre 5 et 20% en mole.

7. Procédé selon la revendication 5, caractérisé en ce que le réactif en défaut est l'hexaméthylène diamine.

8. Procédé selon la revendication 5, caractérisé en ce que la phase d'homogénéisation est effectuée à une température comprise entre 270 et 285°C.

9. Procédé d'obtention de copolyamides souples et homogènes à base d'acide adipique, de

10

# 0 022 048

dimères d'acides gras obtenus par fractionnement d'acides gras polymérisés et contenant en poids plus de 95% de dimères et d'hexaméthylène diamine, caractérisé en ce que l'on prépare de façon directe à une température comprise entre 150 et 300°C, en milieu homogène, des copolymères à partir d'un mélange d'acide adipique, d'acide dimère issu d'acides gras obtenus par polymérisation de mélanges d'acides en C18 et d'hexaméthylène diamine, le rapport molaire en acide adipique par rapport aux acides totaux étant compris entre 0,5 et 0,99, le milieu étant rendu homogène par l'utilisation d'un tiers solvant du mélange des trois produits de départ ou des sels correspondants et/ou des oligomères d'acide adipique et d'hexaméthylène diamine et d'acide dimère et d'hexaméthylène diamine de masse molaire inférieure à 5000, ledit solvant étant inerte vis à vis des réactifs et des réactions d'amidification, le copolymère ainsi obtenu ayant un point, en portant en abscisse la fraction molaire d'acide adipique et en ordonnée la température de fusion déterminée comme indiqué dans la revendication 1, qui est compris dans l'aire ABCD portée sur le graphique représenté en annexe.

10. Procédé selon la revendication 9, caractérisé en ce que le solvant a un point d'ébullition compris entre 170°C et 250°C.

11. Procédé selon la revendication 10, caractérisé en ce que le solvant est la N-méthylpyrrolidone.

12. Procédé selon la revendication 9, caractérisé en ce que la température de copolycondensation est comprise entre 190°C et 280°C.

**Patentansprüche für die Vertragsstaaten: BE CH DE GB IT LI LU NL SE**

1. Flexible und homogene Copolyamide auf Basis von Adipinsäure, Fettsäuredimeren, die durch Fraktionierung von polymerisierten Fettsäuren herstellbar sind und mehr als 95 Gew.-% Dimere enthalten, und von Hexamethylendiamin, dadurch gekennzeichnet, daß einerseits die Dimeren von Fettsäuren abgeleitet sind, die durch Polymerisation von Mischungen von $C_{18}$-Säuren herstellbar sind, und daß anderseits das molare Verhältnis von Adipinsäure, bezogen auf die gesamten Säuren, 0,5 bis 0,99 beträgt und daß schließlich der Punkt, den man erhält, wenn man auf der Abszisse den molaren Anteil an Adipinsäure und auf der Ordinate die Schmelztemperatur des Copolyamids, bestimmt durch Differentialmikrocalorimetrie mit einer Temperaturvariation von 10°C pro Minute, aufträgt, innerhalb der auf der beiliegenden Zeichnung dargestellten Fläche ABCD liegt.

2. Copolyamide nach Anspruch 1, dadurch gekennzeichnet, daß das Fettsäuredimere einen Monomeranteil von weniger als 0,5% enthält, wobei der Rest eine Funktionalität von mehr als 2 aufweist.

3. Verfahren zur Herstellung von Copolyamiden nach Anspruch 1, dadurch gekennzeichnet, daß man in heterogenem Milieu Präpolymere aus einer Mischung von Adipinsäure, dimerer Säure und Hexamethylendiamin oder ihren entsprechenden Salzen herstellt, welche Präpolymere anschließend unter solchen Bedingungen homogenisiert werden, daß der Gleichgewichtszustand der Amidifikationsreaktionen nicht verändert wird, und daß die homogenen Präpolymere schließlich in Polykondensate mit hohem Molekulargewicht überführt werden.

4. Verfahren nach Anspruch 3, dadurch gekennzeichnet, daß man

1 — eine Masse herstellt, die im wesentlichen aus einer Mischung von Adipinsäure, dimerer Säure und Hexamethylendiamin oder ihren entsprechenden Salzen besteht, wobei sich die Gehalte an Amingruppen und Carbonsäuregruppen um nicht mehr als maximal 5%, ausgedrückt in absoluten Zahlen, unterscheiden, daß man dazu die Masse fortschreitend und gleichmäßig durch Erhitzen auf 270°C bei einem Wasserdampfdruck zwischen 13 und 25 bar bringt, welches der dem Beginn der folgenden Phase entsprechende chemische Gleichgewichtszustand ist;

2 — eine Homogenisationsphase mit einer Dauer von 0,5 bis 5 Stunden bei einer Temperatur zwischen 270°C und 290°C unter einem Druck von 13 bis 25 bar durchführt, während welcher der Gleichgewichtszustand der Amidifikationsreaktionen nicht verändert wird, und anschließend eine Polykondensation nach bekannten Verfahren ausführt.

5. Verfahren nach Anspruch 4, dadurch gekennzeichnet, daß sich die Gehalte an Amingruppen und Carbonsäuregruppen um nicht mehr als höchstens 1% unterscheiden.

6. Verfahren nach Anspruch 4, dadurch gekennzeichnet, daß die Ausgangsmasse eine Emulsion des Salzes von dimerer Säure und Hexamethylendiamin in der wässerigen Lösung des Salzes von Adipinsäure und Hexamethylendiamin ist, deren Stöchiometrie durch Messung des pH-Werts eingestellt wird.

7. Verfahren nach Anspruch 3, dadurch gekennzeichnet, daß man

1 — eine Masse herstellt, die im wesentlichen aus einer Mischung von Adipinsäure, dimerer Säure und Hexamethylendiamin und/oder ihren entsprechenden Salzen besteht, wobei sich die Gehalte an Amingruppen und Carbonsäuregruppen um mehr als 5% unterscheiden, daß man dazu die Masse fortschreitend und gleichmäßig auf eine Temperatur, entsprechend dem Beginn der folgenden Phase, bringt;

2 — eine Homogenisationsphase mit einer Dauer von 10 Minuten bis 2 Stunden bei einer Temperatur zwischen 265°C und 290°C durchführt, und anschließend fortschreitend fehlendes Reagens

11

bei Temperaturen zwischen 260°C und 290°C zusetzt, bis ein Copolykondensat mit der gewünschten Viskosität hergestellt ist.

8. Verfahren nach Anspruch 7, dadurch gekennzeichnet, daß der Überschuß an einem der aminierten oder sauren Reagentien 5 bis 20 Mol% beträgt.

9. Verfahren nach Anspruch 7, dadurch gekennzeichnet, daß das fehlende Reagens Hexamethylendiamin ist.

10. Verfahren nach Anspruch 7, dadurch gekennzeichnet, daß die Homogenisationsphase bei einer Temperatur zwischen 270 und 285°C ausgeführt wird.

11. Verfahren zur Herstellung von Copolyamiden nach Anspruch 1, dadurch gekennzeichnet, daß man bei einer Temperatur zwischen 150 und 300°C in homogenem Milieu direkt Copolymere aus einer Mischung von Adipinsäure, dimerer Säure und Hexamethylendiamin herstellt, wobei das Milieu homogen gemacht wird durch Verwendung eines Drittlösungsmittels für die Mischung der drei Ausgangsmaterialien oder von deren entsprechenden Salzen und/oder der Oligomeren von Adipinsäure und Hexamethylendiamin und dimerer Säure und Hexamethylendiamin mit einer molekularen Masse kleiner 5000, welches Lösungsmittel inert gegenüber den Reagenzien und Amidifikationsreaktionen ist.

12. Verfahren nach Anspruch 11, dadurch gekennzeichnet, daß das Lösungsmittel einen Siedepunkt zwischen 170 und 250°C hat.

13. Verfahren nach Anspruch 12, dadurch gekennzeichnet, daß das Lösungsmittel N-Methylpyrrolidon ist.

14. Verfahren nach Anspruch 11, dadurch gekennzeichnet, daß die Copolykondensationstemperatur 190° bis 280°C beträgt.

## Patentansprüche für den Vertragsstaat: AT

1. Verfahren zur Herstellung von flexiblen und homogenen Copolyamiden auf Basis von Adipinsäure, Fettsäuredimeren, die durch Fraktionierung von polymerisierten Fettsäuren herstellbar sind und mehr als 95 Gew.-% Dimere enthalten, und Hexamethylendiamin, dadurch gekennzeichnet, daß man

— in heterogenem Milieu Präpolymere aus einer Mischung von Adipinsäure, dimerer Säure, die von Fettsäuren, hergestellt durch Polymerisation von Mischungen von $C_{18}$-Säuren, abgeleitet ist, und Hexamethylendiamin oder ihren entsprechenden Salzen, wobei das molare Verhältnis an Adipinsäure zu dem Gesamtgehalt an Säuren 0,5 bis 0,99 beträgt, herstellt,

— dann diese Präpolymeren unter solchen Bedingungen homogenisiert, daß der Gleichgewichtszustand der Amidifikationsreaktionen nicht verändert wird,

— schließlich die so erhaltenen homogenen Präpolymeren in Polykondensate mit hohem Molekulargewicht umwandelt, die einen Punkt aufweisen, den man erhält, wenn man auf der Abszisse den molaren Anteil an Adipinsäure und auf der Ordinate die Schmelztemperatur des erhaltenen Copolyamids, bestimmt durch Differentialmikrocalorimetrie mit einer Temperaturvariation von 10°C pro Minute, aufträgt, innerhalb der auf der beiliegenden Zeichnung dargestlelten Fläche ABCD liegt.

2. Verfahren nach Anspruch 1, gekennzeichnet durch:

(1) — die Herstellung einer Masse, die im wesentlichen aus einer Mischung von Adipinsäure, dimerer Säure und Hexamethylendiamin oder ihren entsprechenden Salzen besteht, wobei sich die Gehalte an Amingruppen und Carbonsäuregruppen um nicht mehr als maximal 5%, ausgedrückt in absoluten Zahlen, unterscheiden, wozu man die Masse fortschreitend und gleichmäßig durch Erhitzen auf 270°C bei einem Wasserdampfdruck von 13 bis 25 bar bringt, welches der dem Beginn der folgenden Phase entsprechende chemische Gleichgewichtszustand ist;

(2) — eine Homogenisationsphase mit einer Dauer von 0,5 bis 5 Stunden bei einer Temperatur von 270°C bis 290°C unter einem Wasserdruck von 13 bis 25 bar, während welcher der Gleichgewichtszustand der Amidifikationsreaktionen nicht verändert wird, gefolgt von einer Polykondensation nach bekannten Verfahren.

3. Verfahren nach Anspruch 2, dadurch gekennzeichnet, daß sich die Gehalte an Amingruppen und Carbonsäuregruppen um nicht mehr als höchstens 1% unterscheiden.

4. Verfahren nach Anspruch 2, dadurch gekennzeichnet, daß die Ausgangsmasse eine Emulsion des Salzes von dimerer Säure und Hexamethylendiamin in der wässerigen Lösung des Salzes von Adipinsäure und Hexamethylendiamin ist, deren Stöchiometrie durch Messung des pH-Werts eingestellt wird.

5. Verfahren nach Anspruch 1, gekennzeichnet durch:

(1) — die Herstellung einer Masse, die im wesentlichen aus einer Mischung von Adipinsäure, dimerer Säure und Hexamethylendiamin und/oder ihren entsprechenden Salzen besteht, wobei sich die Gehalte an Amingruppen und Carbonsäuregruppen um mehr als 5% unterscheiden, wozu man die Masse fortschreitend und gleichmäßig auf eine Temperatur, entsprechend dem Beginn der folgenden Phase, bringt;

(2) — eine Homogenisationsphase mit einer Dauer von 10 Minuten bis 2 Stunden bei einer Temperatur zwischen 265°C und 290°C, gefolgt von der fortschreitenden Zugabe des fehlenden Reagens bei Temperaturen zwischen 260°C und 290°C bis zur Herstellung des Copolykondensats mit der gewünschten Viskosität.

6. Verfahren nach Anspruch 5, dadurch gekennzeichnet, daß der Überschuß an einem der aminierten oder sauren Reagentien 5 bis 20 Mol% beträgt.

7. Verfahren nach Anspruch 5, dadurch gekennzeichnet, daß das fehlende Reagens Hexamethylendiamin ist.

8. Verfahren nach Anspruch 5, dadurch gekennzeichnet, daß die Homogenisierungsphase bei einer Temperatur zwischen 270 und 285°C ausgeführt wird.

9. Verfahren zur Herstellung von flexiblen und homogenen Copolyamiden auf Basis von Adipinsäure, Fettsäuredimeren, die durch Fraktionierung von polymerisierten Fettsäuren herstellbar sind und mehr als 95 Gew.-% Dimere enthalten, und Hexamethylendiamin, dadurch gekennzeichnet, daß man bei einer Temperatur zwischen 150 und 300°C in homogenem Milieu direkt Copolymere aus einer Mischung von Adipinsäure, dimerer Säure, die von Fettsäuren, hergestellt durch Polymerisation von Mischungen von $C_{18}$-Säuren, abgeleitet ist, und Hexamethylendiamin, wobei das molare Verhältnis an Adipinsäure zum Gesamtgehalt an Säuren zwischen 0,5 und 0,99 liegt und das Milieu durch Verwendung eines Drittlösungsmittels für die Mischung der drei Ausgangsmaterialien oder ihrer entsprechenden Salze und/oder der Oligomeren von Adipinsäure und Hexamethylendiamin und dimerer Säure und Hexamethylendiamin mit einer molekularen Masse kleiner 5000 homogen gemacht wird, welches Lösungsmittel inert gegenüber den Reagenzien und den Amidifikationsreaktionen ist, und wobei die so erhaltenen Copolymeren eine Punkt aufweisen, den man erhält, wenn man auf der Abszisse den molaren Anteil an Adipinsäure und auf der Ordinate die Schmelztemperatur, bestimmt wie im Anspruch 1 angegeben, aufträgt, innerhalb der auf der beiliegenden Zeichnung dargestellten Fläche ABCD liegt.

10. Verfahren nach Anspruch 9, dadurch gekennzeichnet, daß das Lösungsmittel einen Siedepunkt zwischen 170°C und 250°C hat.

11. Verfahren nach Anspruch 10, dadurch gekennzeichnet, daß das Lösungsmittel N-Methylpyrrolidon ist.

12. Verfahren nach Anspruch 9, dadurch gekennzeichnet, daß die Polykondensationstemperatur zwischen 190°C und 280°C liegt.

## Claims for the Contracting States: BE CH DE GB IT LI LU NL SE

1. Flexible, homogeneous copolyamides based on adipic acid and on dimers of fatty acids obtained by fractionating polymerised fatty acids and containing more than 95% by weight of dimers and of hexamethylenediamine, characterised in that, on the one hand, the dimers originate from fatty acids obtained by polymerising mixtures of $C_{18}$ acids and, on the other hand, the molar ratio of adipic acid to the total acids is between 0.5 and 0.99 and finally the point obtained by plotting the molar fraction of adipic acid as abscissa and the melting point of the copolyamide as ordinate, this temperature being determined by differential microcalorimetry with a temperature change of 10°C per minute, is located in the region ABCD plotted on the attached graph.

2. Copolyamides according to Claim 1, characterised in that the fatty acid dimer contains a monomer fraction which is less than 0.5%, the remainder having a functionality greater than 2.

3. A process for obtaining copolyamides according to Claim 1, characterised by preparing, in a heterogeneous medium, prepolymers from a mixture of adipic acid, dimer acid and hexamethylenediamine or there corresponding salts, there prepolymers being then homogenised under conditions such that the state of equilibrium of the amide-forming reactions is unaltered, the homogeneous prepolymers being finally converted into polycondensates of high molecular weight.

4. A process according to Claim 3, characterised:

1 — by the use of a composition consisting substantially of a mixture of adipic acid, dimer acid and hexamethylene diamine or of their corresponding salts, such that the contents of amino groups and of carboxyl groups do not differ by more than a maximum of 5% in absolute value, the use consisting in bringing the composition by heating gradually and steadily up to 270°C under a steam pressure of between 13 and 25 bars, which is the state of chemical equilibrium corresponding to the start of the following stage;

2 — by a homogenisation stage with a duration of between 0.5 and 5 hours, at a temperature between 270°C and 290°C under a steam pressure between 13 and 25 bars, during which the state of equilibrium of the amide-forming reactions is unaltered, followed by a polycondensation according to the known processes.

5. A process according to Claim 4, characterised in that the contents of amino groups and of carboxyl groups do not differ by more than 1%.

6. A process according to Claim 4, characterised in that the starting composition is an emulsion of the salt of the dimer acid with hexamethylenediamine in the aqueous solution of the salt of adipic acid with hexamethylenediamine and whose stoichiometry is adjusted by pH measurement.

7. A process according to Claim 3, characterised:

1 — by using a composition consisting substantially of a mixture of adipic acid, dimer acid and hexamethylenediamine and/or their corresponding salts, such that the contents of amino groups and carboxyl groups differ by more than 5%, the use consisting in bringing the composition gradually and steadily to a temperature which corresponds to the start of the following stage;

2 — by a homogenisation stage with a duration of between 10 minutes and 2 hours at a temperature between 265°C and 290°C followed by the gradual addition of the deficient reactant at temperatures between 260° and 290°C until the copolycondensate having the desired viscosity is obtained.

8. A process according to Claim 7, characterised in that the excess of one of the amine or acid reactants is between 5 and 20 mol%.

9. A process according to Claim 7, characterised in that the deficient reactant is hexamethylenediamine.

10. A process according to Claim 7, characterised in that the homogenisation stage is carried out at a temperature between 270 and 285°C.

11. A process for obtaining copolyamides according to Claim 1, characterised by direct preparation, at a temperature between 150 and 300°C, in a homogeneous medium, of copolymers from a mixture of adipic acid, dimer acid and hexamethylenediamine, the medium being made homogeneous by using a third solvent for the mixture of the three starting materials or the corresponding salts and/or the oligomers of adipic acid with hexamethylenediamine and of dimer acid with hexamethylenediamine, of molecular weight below 5,000, this solvent being unreactive in respect of the reactants and the amide-forming reactions.

12. A process according to Claim 11, characterised in that the solvent has a boiling point between 170° and 250°C.

13. A process according to Claim 12, characterised in that the solvent is N-methylpyrrolidone.

14. A process according to Claim 11, characterised in that the temperature of copolycondensation is between 190° and 280°C.

## Claims for the Contracting State: AT

1. A process for obtaining flexible, homogeneous copolyamides based on adipic acid, fatty acid dimers obtained by fractionating polymerised fatty acids containing more than 95% by weight of dimers and hexamethylenediamine, characterised by:

— preparing, in a heterogeneous medium, prepolymers from a mixture of adipic acid, the dimer acid originating from fatty acids obtained by polymerising mixtures of $C_{18}$ acids and hexamethylenediamine or their corresponding salts, the molar ratio of adipic acid to the total acids being between 0.5 and 0.99,

— then homogenising these prepolymers under such conditions that the state of equilibrium of the amide-forming reactions is unaltered,

— and finally converting the homogeneous prepolymers thus obtained into polycondensates of high molecular weight in respect of which the point obtained by plotting the molar fraction of adipic acid as abscissa and the melting point of the copolyamide obtained as ordinate, this temperature being determined by differential microcalorimetry with a temperature change of 10°C per minute, is located in the region ABCD plotted on the attached graph.

2. A process according to Claim 1, characterised:

(1) by using a composition consisting substantially of a mixture of adipic acid, dimer acid and hexamethylenediamine or their corresponding salts, such that the contents of amino groups and carboxyl groups do not differ by more than a maximum of 5% in absolute value, the use consisting in bringing the composition by heating gradually and steadily to 270°C under a steam pressure between 13 and 25 bars, which is the state of chemical equilibrium corresponding to the start of the following stage;

(2) by a homogenisation stage with a duration of between 0.5 and 5 hours, at a temperature between 270°C and 290°C under a steam pressure between 13 and 25 bars during which the state of equilibrium of the amide-forming reactions is unaltered, followed by a polycondensation according to the known processes.

3. A process according to Claim 2, characterised in that the contents of amino groups and of carboxyl groups do not differ by more than 1%.

4. A process according to Claim 2, characterised in that the starting composition is an emulsion of the salt of the dimer acid with hexamethylenediamine in the aqueous solution of the salt of adipic acid with hexamethylenediamine and whose stoichiometry is adjusted by pH measurement.

5. A process according to Claim 1, characterised:

(1) by using a composition consisting substantially of a mixture of adipic acid, dimer acid and hexamethylene diamine and/or their corresponding salts, such that the contents of amino groups and carboxyl groups differ by more than 5%, the use consisting in bringing the composition gradually and steadily to a temperature which corresponds to the start of the following stage;

(2) by a homogenisation stage with a duration of between 10 minutes and 2 hours at a temperature between 265°C and 290°C followed by the gradual addition of the deficient reactant at temperatures between 260° and 290°C until the copolycondensate having the desired viscosity is obtained.

6. A process according to Claim 5, characterised in that the excess of one of the amine or acid reactants is between 5 and 20 mol%.

7. A process according to Claim 5, characterised in that the deficient reactant is hexamethylenediamine.

8. A process according to Claim 5, characterised in that the homogenisation stage is carried out at a temperature between 270 and 285°C.

9. A process for obtaining flexible, homogeneous copolyamides based on adipic acid, dimers of fatty acids obtained by fractionating polymerised fatty acids containing more than 95% by weight of dimers and hexamethylenediamine, characterised by preparing directly, at a temperature between 150 and 300°C, in a homogeneous medium, copolymers from a mixture of adipic acid, dimer acid originating from fatty acids obtained by polymerising mixtures of $C_{18}$ acids with hexamethylene-diamine, the molar ratio of adipic acid to the total acids being between 0.5 and 0.99, the medium being made homogeneous by using a third solvent for the mixture of the three starting materials or the corresponding salts and/or oligomers of adipic acid with hexamethylenediamine and the dimer acid with hexamethylenediamine with a molecular weight of less than 5,000, the said solvent being unreactive in respect of the reactants and the amide-forming reactions, the copolymer thus obtained having a point, obtained by plotting the molar fraction of adipic acid as abscissa and the melting point, determined as indicated in Claim 1, as ordinate, which is located in the region ABCD plotted on the attached graph.

10. A process according to Claim 9, characterised in that the solvent has a boiling point between 170°C and 250°C.

11. A process according to Claim 10, characterised in that the solvent is N-methylpyrrolidone.

12. A process according to Claim 9, characterised in that the temperature of copolycondensation is between 190°C and 280°C.